# EUROPÄISCHE PATENTSCHRIFT

(11) **EP 0 686 258 B1**
(45) Veröffentlichungstag und Bekanntmachung des Hinweises auf die Patenterteilung: **11.10.2000**
(21) Anmeldenummer: 94909007.0
(22) Anmeldetag: 18.02.1994
(51) Int. Cl.: G01N 30/48, B01D 15/08

(54) **TRENNMITTEL**
SEPARATOR
SEPARATEUR

(30) Priorität: 26.02.1993 WO PCT/EP93/00447
(43) Veröffentlichungstag der Anmeldung: 13.12.1995
(73) Patentinhaber: MERCK PATENT GmbH, 64293 Darmstadt (DE)
(72) Erfinder: CABRERA, Karin, D-63303 Dreieich (DE); SÄTTLER, Günther, D-64354 Reinheim (DE); WIELAND, Gerhard, D-64625 Bensheim (DE)
(86) Internationale Anmeldenummer: EP9400488
(87) Internationale Veröffentlichungsnummer: WO9419687

(56) Entgegenhaltungen:
- EP-A- 0 160 267
- EP-A- 0 161 659
- EP-A- 0 220 764
- EP-A- 0 313 090
- WO-A-93/01494
- DE-A- 4 102 635
- DE-A- 4 205 969
- FR-A- 2 121 002
- US-A- 3 549 524
- US-A- 4 933 307
- CHEMICAL ABSTRACTS, vol. 110, no. 8, 20. Februar 1989, Columbus, Ohio, US; abstract no. 62516w, IWAMOTO 'MANUFACTURE OF GLASS-CERAMICS' Seite 311 ;Spalte 1 ; & JP,A,63 201 020 (IWAMOTO) 19. August 1988
- CHEMICAL ABSTRACTS, vol. 90, no. 24, 11. Juni 1979, Columbus, Ohio, US; abstract no. 197143, KATO 'COLUMN FOR GAS AND LIQUID CHROMATOGRAPHY' Seite 714 ;Spalte 1 ; & JP,A,7 909 691 (KATO) 24. Januar 1979
- DATABASE WPI Week 9103, Derwent Publications Ltd., London, GB; AN 91-019089 & JP,A,2 291 963 (MATSUNAMI GLASS) 3. Dezember 1990

## Beschreibung

Die Erfindung betrifft die Verwendung von porösen keramischen Formkörpern als Medium für Stofftrennungen, insbesondere als stationäre Phase in der Chromatographie. Die Erfindung betrifft weiterhin keramische Formkörper, deren Porenoberflächen modifiziert sind.

Stofftrennungen im Sinne der Erfindung umfassen im wesentlichen chromatographische Trennungen, beispielsweise mittels Säulen-, Dünnschicht- oder Gaschromatographie, Flüssig-Flüssig-Extraktionen, Adsorptions- und Desorptionsverfahren unter Beteiligung einer Gasphase oder einer flüssigen Phase und elektrophoretische Trennungen. Nicht umfaßt unter diesem Begriff sind destillative und mechanische Trennungen, beispielsweise Filtrationen.

Bei den Verfahren der Säulenflüssigkeitschromatographie werden Chromatographierohre benutzt, die an beiden Enden mit Filterelementen verschlossen sind, und die mit Anschlußstücken für Zu- und Ableitung für Elutionsmittel versehen sind. In diese Rohre werden pulverförmige Sorbentien eingefüllt. Anstelle von Chromatographierohren, bei denen alle Bauelemente ausgetauscht werden müssen, werden auch Kartuschensysteme benutzt, bei denen lediglich ein Rohr mit Filterelementen, das ein pulverförmiges Sorbens enthält, ausgetauscht werden muß. Die Verschraubungen sind weiterverwendbar. Derartige Kartuschensysteme sind in EP-B-0 268 185 und in EP-B-0 305 817 beschrieben. Bei derartigen Säulenpackungen bestehend aus losen pulverförmigen Sorbentien kommt es beispielsweise durch mechanische Beanspruchung zu Veränderungen, wodurch die Reproduzierbarkeit zwischen Chromatographieläufen verringert wird.

EP-A-0 160 267 offenbart Formkörper aus Cordierit, einem Magnesium-Aluminium-Silikat, und deren Verwendung als Sorbentien für die Chromatographie

Aufgabe der Erfindung ist es, verbesserte stationäre Phasen mit stabiler Struktur für Stofftrennungen, insbesondere für die Chromatographie, beispielsweise für die Dünnschicht- und Säulenchromatographie, bereitzustellen.

Diese Aufgabe wird erfindungsgemäß durch die Bereitstellung von porösen keramischen Formkörpern, im wesentlichen bestehend aus calciumphosphathaltige Verbindungen wie Hydroxylapatit, SiO₂, Al₂O₃, SiC, SiOC, ZrO₂, TiO₂ oder BN, wobei die Porenflächen mit einem Silanderivat oder einem Siloxan modifiziert sind, gelöst. Ebenso wird diese Aufgabe durch die Verwendung besagter Sorbentien für Stofftrennungen gelöst.

Gegenstand der Erfindung ist ein poröser keramischer Formkörper im wesentlichen bestehend aus calciumphosphathaltige Verbindungen wie Hydroxylapatit, SiO₂, Al₂O₃, SiC, SiOC, ZrO₂, TiO₂ oder BN, dessen Porenflächen mit einem Silanderivat der Formel I oder einem Siloxan modifiziert sind, und dessen Verwendung für Stofftrennungen. In einer besonders bevorzugten Ausführungsform sind die Mantelflächen dieses Formkörpers unporös oder mit einem dichten Überzug versehen.

SiXₙR¹₍₃₋ₙ₎R² I

In Formel I bedeuten:
- X: Methoxy, Ethoxy oder Halogen,
- R¹: C₁ - C₅ -Alkyl,
- n: 1, 2 oder 3,
wobei
- R²: eine der im folgenden angegebene Bedeutungen besitzt:
a) unsubstituiertes oder substituiertes Alkyl oder Aryl, wie z.B. n-Octadecyl, n-Octyl, Benzyl- oder Cyanopropyl;
b) anionische oder saure Reste, wie z.B. Carboxypropyl;
c) kationische oder basische Reste, wie z.B. Aminopropyl, Diethylaminopropyl oder Triethylammoniumpropyl;
d) hydrophile Reste, wie z.B. (2,3-Dihydroxypropyl)-oxypropyl;
e) bindungsfähige aktivierte Reste, wie z.B. (2,3-Epoxypropyl)-oxypropyl.

Gegenstand der Erfindung ist eine Chromatographiesäule ausgerüstet mit Anschlußstücken für Zu- und Ableitung für Elutionsmittel, dadurch gekennzeichnet, daß als stationäre Phase ein erfindungsgemäßer modifizierter poröser keramischer Formkörper enthalten ist.

Gegenstand der Erfindung ist eine Kartusche für die Flüssigkeitschromatographie, dadurch gekennzeichnet, daß als stationäre Phase ein erfindungsgemäßer modifizierter poröser keramischer Formkörper enthalten ist.

Gegenstand der Erfindung sind ferner Verfahren zur säulenchromatographischen Auftrennung eines Gemisches, wobei eine Mischung in einem Elutionsmittel gelöst wird, auf eine Trennsäule aufgetragen wird und mit einem Elutionsmittel eluiert wird, und wobei als Trennsäule eine erfindungsgemäße Chromatographiesäule verwendet wird.

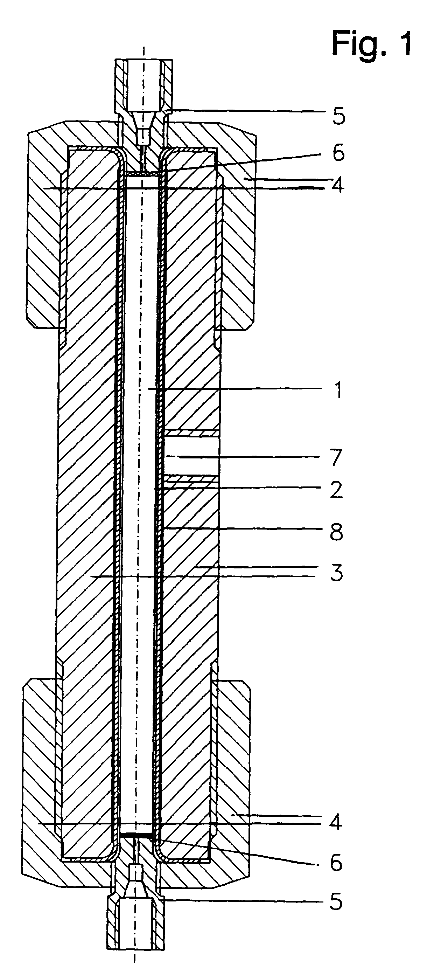

In der Abbildung 1 ist eine erfindungsgemäße Chromatographiesäule dargestellt.

Erfindungsgemäß können die dem Fachmann für die Herstellung von Keramiken bekannten Materialien benutzt werden, die bei Temperaturen zwischen 600 und 2000 °C gesintert werden. Dazu gehören oxidische und nichtoxidische anorganische Materialien wie z.B. Oxide, Carbide, Boride, Nitride sowie Mischungen davon. Beispiele solcher Materialien sind insbesonders calciumphosphathaltige Verbindungen wie Hydroxylapatit, SiO₂, Al₂O₃, SiC, SiOC, ZrO₂, TiO₂ und BN.

Herkömmliche Chromatographiesäulen können eine im wesentlichen monomodale Porengrößenverteilung aufweisen, wenn die verwendeten Partikel eng klassiert und nicht porös sind; sie weisen eine im wesentlichen bimodale Porengrößenverteilung auf, beispielsweise wenn die Säulenpackung aus eng klassierten porösen Partikeln besteht. Auch andere Porengrößenverteilungen sind bei herkömmlichen Chromatographiesäulen bekannt. Entsprechend können die erfindungsgemäß benutzten porösen Formkörper eine im wesentlichen monomodale Porengrößenverteilung oder eine im wesentlichen bimodale Porengrößenverteilung aufweisen. Auch andere Porengrößenverteilungen können erfindungsgemäß benutzt werden. Dazu gehören auch durchgängige kanalförmige Poren. Dem Fachmann sind geeignete Verfahren zur Herstellung von porösen keramischen Formkörpern aus verschiedenartigen Materialien bekannt. Geeignete Ausgangsmaterialien und Verfahrensvarianten sind in Handbüchern wie Ullmann's Encyclopedia of Industrial Chemistry (1986) Verlag Chemie und in Kingery, W.D., Bowen, H.K., und Uhlmann, D.R. (1976) Introduction to Ceramics, John Wiley Verlag, beschrieben. Entsprechend dem Verwendungszweck können die erfindungsgemäß verwendeten porösen keramischen Formkörper verschiedene geometrische Formen, wie z.B. Zylinder, Prismen, Quader, Kegel, Scheiben oder Platten, aufweisen. Beispielsweise werden bei der Verwendung für die Säulenchromatographie zylinderförmige poröse Formkörper bevorzugt, bei der Dünnschichtchromatographie scheiben- oder plattenförmige Formkörper.

Bei herkömmlichen chromatographischen Trennverfahren werden häufig chemisch modifizierte Trennmaterialien eingesetzt, um unterschiedlichste Selektivitäten für die verschiedenen Prinzipien der chromatographischen Stofftrennung zu erreichen:
Adsorptionschromatographie,
reversed phase (RP) Chromatographie,
Verteilungschromatographie,
Gelpermeationschromatographie,
hydrophobe Interaktionschromatographie,
Affinitätschromatographie,
Ionenaustauschchromatographie,
chromatographische Trennung von Racematen an chiralen Trägern,
selektive Adsorption und Desorption.

Die Adsorptionschromatographie wird u. a. auch bei der Probenvorbereitung als spezielle Ausführungsform eingesetzt. Dabei werden Sorbentien, die im wesentlichen aus einem anorganischen Basisträger bestehen, beispielsweise aus SiO₂ oder Al₂O₃, an der Oberfläche modifiziert, um das Trennmögen des Materials zu beeinflussen. Grundsätzlich können die zur Modifizierung chromatographischer Trägermaterialien eingesetzten Verfahren auch zur Modifizierung der erfindungsgemäßen Formkörpern benutzt werden; geeignete Modifikationsverfahren sind dem Fachmann bekannt. Der erfindungsgemäß verwendete Begriff "oberflächenmodifiziert" ist in diesem Sinn zu verstehen. Beispiele derartiger für den genannten Zweck bekannter Oberflächenmodifikationen sind:
a) Die Derivatisierung mit Silanderivaten der Formel I

   SiXₙR¹₍₃₋ₙ₎R² I

   worin
   - X: Methoxy, Ethoxy oder Halogen,
   - R¹: C₁ - C₅ -Alkyl,
   - n: 1, 2 oder 3
   bedeuten und
   - R²: eine der im folgenden angegebene Bedeutungen besitzt:
   a1) unsubstituiertes oder substituiertes Alkyl oder Aryl, wie z.B. n-Octadecyl, n-Octyl, Benzyl- oder Cyanopropyl;
   a2) anionische oder saure Reste, wie z.B. Carboxypropyl;
   a3) kationische oder basische Reste, wie z.B. Aminopropyl, Diethylaminopropyl oder Triethylammoniumpropyl;
   a4) hydrophile Reste, wie z.B. (2,3-Dihydroxypropyl)-oxypropyl;
   a5) bindungsfähige aktivierte Reste, wie z.B. (2,3-Epoxypropyl)-oxypropyl.
b) Die Adsorption oder chemische Bindung von Polymeren wie Polybutadien, Siloxanen, Polymeren auf der Grundlage von Styrol/Divinylbenzol, von (Meth)acrylsäurederivaten oder von anderen Vinylverbindungen, sowie von Peptiden, Proteinen, Polysacchariden und Polysaccharidderivaten an dem Basisträger;
c) Die chemische Bindung von unter b) genannten Polymeren über die unter a) genannten Derivate; dazu gehören Pfropfpolymerisate von Poly(meth)acrylsäurederivaten auf diolmodifiziertem Kieselgel nach EP-B-0 337 144.
d) Die Adsorption oder chemische Bindung von chiralen Phasen, wie z.B. von Aminosäurederivaten, Peptiden oder Proteinen, oder von Cyclodextrinen, Polysacchariden oder Polysaccharidderivaten.

Weitere gebräuchliche Derivatisierungsmöglichkeiten und Derivatisierungsverfahren sind dem Fachmann bekannt und in gängigen Handbüchern wie Unger, K.K. (ed) Porous Silica, Elsevier Scientific Publishing Company (1979) oder Unger, K.K. Packings and Stationary Phases in Chromatographic Techniques, Marcel Dekker (1990) beschrieben.

Die erfindungsgemäßen Formkörper besitzen die für Säulen in der Flüssigkeitschromatographie gebräuchlichen Abmessungen: 2 - 10 mm Durchmesser für analytische Anwendungen und größere Durchmesser (bis zu ca. 0,5 m) für präparative Anwendungen; die Länge beträgt wenige Millimeter bis zu 50 cm, jedoch werden in Spezialfällen auch Säulen von bis zu 2 m Länge eingesetzt. Die erfindungsgemäßen Formkörper sind sowohl als Trenn- als auch als Vorsäulen geeignet. Dabei entfällt das Packen von Säulen oder Kartuschen, wodurch insbesondere bei Vorsäulen, die häufig nur einmal verwendet werden, eine große Ersparnis entsteht. Die erfindungsgemäßen Formkörper stellen ein im Vergleich zu herkömmlichen Sorbenspackungen festes, unveränderliches Sorbensbett dar. Nach ihrer Verwendung sind die erfindungsgemäß benutzten Formkörper leicht zu entsorgen, da diese im Gegensatz zu Säulen oder Kartuschen im wesentlichen nur aus dem keramischen Material bestehen.

Bei der Verwendung als Träger für die Dünnschichtchromatographie sind die Formkörper als dünne Schichten ausgebildet, die zusätzlich einen dickeren unporösen Teil aufweisen können, oder die auf einem nicht-porösen Hilfsträger aufgebracht sein können. Bei der erfindungsgemäßen Verwendung von Formkörpern in der Dünnschichtchromatographie entfällt das aufwendige Auftragen der Sorbensschicht auf die Platte oder Folie.

Die Porosität ist eine wesentliche Eigenschaft der erfindungsgemäß verwendeten keramischen Formkörper. Die Porosität hat wesentliche Einflüsse auf das Flußverhalten, auf die für die chromatographische Trennung wirksame Oberfläche und auf die Möglichkeit, die Oberflächen des Formkörpers zu derivatisieren. Die Porosität wird als Verhältnis von Porenvolumen zum Gesamtvolumen des Formkörpers ausgedrückt. Dieses Verhältnis läßt sich beispielsweise durch die Bestimmung der mittleren Dichte des Formkörpers bestimmen, wenn die Dichte des Gerüstmaterials bekannt ist. Andere Bestimmungsmethoden für die Porosität beruhen auf der Gewichtsbestimmung vor und nach Sättigung des Formkörpers mit Wasser oder auf der Porosometrie. Der Porositätsbereich ist abhängig von dem angewendeten Trennverfahren und den Dimensionen des Formkörpers. Für die Säulenflüssigkeitschromatographie wird ein Porositätsgrad von 20 - 75 %, insbesondere von 50 - 65 %, bevorzugt. Die Oberfläche der erfindungsgemäß verwendeten porösen Formkörpern beträgt typischerweise 1 - 1000 m²/g.

Die in der Abbildung 1 beispielhaft dargestellte erfindungsgemäße Chromatographiesäule besteht aus einem als Sorbensbett dienenden porösen keramischen Formkörper (1), einem flüssigkeitsdichten Mantel (2) aus Teflon, einem Druckmantel (3) mit endständigen Überwurfmuttern (4) mit Anschlußstücken (5). Zwischen dem Formkörper und dem Anschlußstück kann ein Filter (6), beispielsweise ein Sieb aus Teflon, angeordnet sein. Um den flüssigkeitsdichten Mantel von dem Elutionsmitteldruck zu entlasten, kann durch einen Anschlußstutzen (7) im Druckmantel eine druckübertragende Flüssigkeit in einen Spalt (8) zwischen flüssigkeitsdichten Mantel (2) und Druckmantel (3) gepreßt werden, wobei der dabei aufgewendete Druck im allgemeinen höher oder gleich dem Elutionsmitteldruck ist. Als druckübertragende Flüssigkeit können Hydrauliköle, wäßrige Lösungen oder das Elutionsmittel dienen.

### Beispiele:

### A Behandlung und Derivatisierung von Formkörpern

### Beispiel A1: Behandlung eines Formkörpers aus Al₂O₃

Ein handelsüblicher poröser Formkörper aus Al₂O₃ mit einem Durchmesser von 4 mm und einer Länge von 125 mm (Porositätsgrad 20-30 %) wird in einer Mischung aus 125 ml Acetonitril und 125 ml Natronlauge (25 mM) gelegt und in einem Laborultraschallbad 45 Minuten beschallt. Anschließend wird der Formkörper in reinem Acetonitril nochmals beschallt (15 Mininuten).

### Beispiel A2: Behandlung eines Formkörpers aus SiO₂

Ein handelsüblicher keramischen Formkörper aus SiO₂ mit einem Durchmesser von 4 mm, einer Länge von 125 mm und einer Porosität von 50 Vol% wird in einen mit 25%iger Salzsäure gefüllten Meßzylinder gegeben und dort 48 Stunden belassen. Anschließend wird er mehrmals mit Methanol/ Wasser gewaschen.

### Beispiel A3: Modifizierung eines porösen keramischen Formkörpers

Ein handelsüblicher keramischer Formkörper aus SiO₂ mit einem Durchmessser von 4 mm, einer Länge von 125 mm und einer Porosität von 50 Vol% wird nach dem von Gilpin et al. beschriebenen Verfahren (Anal. Chem. **46**, 1314 ff (1974)) in situ mit Methyloctadecyldichlorsilan chemisch derivatisiert: Dazu wird eine Lösung (10 % G/G) des Silans in Toluol durch den Formkörper gepumpt. Anschließend wird mit reinem Toluol gewaschen und mit Acetonitril und Acetonitril-Wasser (50:50; V:V) bis zum Erreichen einer konstanten Basislinie konditioniert.

### Beispiel A4: Herstellung eines für Vorsäulen geeigneten Formkörpers aus Al₂O₃

Nach Beispiel A1 hergestellte Formkörper werden in kurze (Länge 4 mm) Stücke getrennt, die in eine Vorsäulenhalterung passen.

### Beispiel A5: Herstellung eines porösen, chemisch modifizierten, keramischen Formkörpers

Der nach Beispiel A2 vorbehandelte Formkörper wird wie unter Beispiel A3 beschrieben chemisch modifiziert.

### B Chromatographiesäulen und -kartuschen

### Beispiel B1: Trennsäule mit einem porösen keramischen Formkörper

Der Formkörper aus Beispiel A1 wird in eine Halterung entsprechend Abbildung 1 eingelegt, so daß Zu- und Ableitungen für das Elutionsmittel an den Stirnseiten des Zylinders angebracht werden können und der Zylindermantel lösungsmitteldicht abgeschlossen ist. Diese Säule wird an eine übliche HPLC-Apparatur angeschlossen.

### Beispiel B2: Trennsäule mit einem derivatisierten, porösen keramischen Formkörper

Der Formkörper aus Beispiel A3 wird in eine Halterung entsprechend Abbildung 1 eingelegt, so daß Zu- und Ableitungen für das Elutionsmittel an den Stirnseiten des Zylinders angebracht werden können und der Zylindermantel lösungsmitteldicht abgeschlossen ist. Diese Säule wird an eine übliche HPLC-Apparatur angeschlossen.

### Beispiel B3: Trennsäule mit einem porösen, chemisch modifizierten, keramischen Formkörper

Der Formkörper aus Beispiel A5 wird in eine Halterung eingelegt, so daß Zu- und Ableitungen für das Elutionsmittel an den Stirnseiten des Zylinders angebracht werden können und der Zylindermantel lösungsmitteldicht abgeschlossen ist. Diese Säule wird an eine übliche HPLC-Apparatur angeschlossen.

### Beispiel B4: Trennsäule mit einem porösen keramischen Formkörper

Ein handelsüblicher poröser Formkörper aus ZrO₂ mit einem Durchmesser von 4 mm und einer Länge von 125 mm (Porositätsgrad 20-30 %) wird in eine Halterung entsprechend Abbildung 1 eingelegt, so daß Zu- und Ableitungen für das Elutionsmittel an den Stirnseiten des Zylinders angebracht werden können und der Zylindermantel lösungsmitteldicht abgeschlossen ist. Diese Säule wird an eine übliche HPLC-Apparatur angeschlossen.

### C Anwendungsbeispiele

### Beispiel C1: Trennung isomerer Nitroanilide

Auf die Trennsäule aus Beispiel B1 werden 5 µl einer Mischung von 2-Nitroacetanilid (88 µg/ml) und 3-Nitroacetanilid (545 µg/ml) in dem Elutionsmittel n-Heptan/Dioxan (80:20; V:V) aufgetragen. Es wird mit 0,05 ml/min eluiert und durch Messung der UV- Absorption bei 254 nm detektiert. Beide Substanzen werden getrennt nach 22 Minuten (2-Nitroacetanilid) und nach 51 Minuten (3-Nitroacetanilid) eluiert.

### Beispiel C2: Trennung von Aromaten

Auf die Trennsäule aus Beispiel B2 werden 10 µl einer Mischung von Naphthalin (17 µg/ml), Anthracen (3 µg/ml) und Benzanthracen (600 µg/ml) in dem Elutionsmittel Acetonitril/Wasser (50:50; V:V) aufgegeben. Es wird mit einem Fluß von 1 ml/ Min. eluiert und durch UV-Absorption bei 254 nm detektiert. Alle drei Substanzen werden getrennt:

| | Retentionszeiten in Min |
|---|---|
| Naphthalin | 1.6 |
| Anthracen | 3.1 |
| Benzanthracen | 6.8 |

### Beispiel C3: Trennung von methylierten Anilinen

Auf die Trennsäule aus Beispiel B2 werden 10 µl einer Mischung von Anilin, N-Methylanilin and N,N-Dimethylanilin in dem Elutionsmittel Acetonitril/Wasser (75:25; V:V) aufgegeben. Es wird mit 0.8 ml/ Min eluiert und durch Messung der UV-Absorption bei 254 nm detektiert. Alle drei Substanzen werden getrennt:

| | Aufgabe in µg/ ml | Retentionszeit in Min |
|---|---|---|
| Anilin | 13.2 | 1.05 |
| N-Methylanilin | 8.6 | 1.74 |
| N,N-Dimethylanilin | 12.9 | 4.9 |

### Beispiel C4: Trennung alkylierter Aniline

Auf die Trennsäule aus Beispiel B2 werden 10 µl einer Mischung aus N,N-Dimethylanilin und N,N-Diethylanilin aufgegeben und unter den Bedingungen wie in Beispiel C3 angegeben eluiert. Beide Substanzen werden getrennt eluiert:

| | Aufgabe in µg/ ml | Retentionszeit in Min |
|---|---|---|
| N,N-Dimethylanilin | 5.8 | 1.22 |
| N,N-Diethylanilin | 21.3 | 8.13 |

### Beispiel C5: Trennung von Phtalsäureestern

Auf die Trennsäule aus Beispiel B2 werden 10 µl einer Mischung aus Benzylbutylphthalat und Dinonylphthalat aufgegeben und unter den Bedingungen wie in Beispiel C3 angegeben eluiert. Beide Substanzen werden getrennt eluiert:

| | Aufgabe in µg/ ml | Retentionszeit in Min |
|---|---|---|
| Benzylbutylphthalat | 130 | 1.03 |
| Dinonylphthalat | 410 | 5.66 |

### Beispiel C6: Trennung von Proteinen

Auf die Trennsäule aus Beispiel B3 werden 10 µl einer Proteinmischung aus Trypsin, Ribonuclease A, Cytochrom C, BSA und Ovalbumin gelöst in 0.1% Trifluoressigsäure aufgegeben. Unter folgenden Bedingungen wird eluiert: Fluß: 0.8 ml/ Min; Detektion: UV-Absorption bei 280 nm; Eluent : A: Wasser + 0.2% Trifluoressigsäure und B: Acetonitril + 0.2% Trifluoressigsäure; Gradient: von A: 80% + B: 20% auf A: 0% + B: 100% innerhalb von 10 Min. Die 5 Proteine werden getrennt:

| | Konzentration mg/ ml | Retentionszeit in Min |
|---|---|---|
| Trypsin | 5.5 | 0.7 |
| Ribonuclease A | 2.3 | 3.52 |
| Cytochrom C | 2.1 | 4.41 |
| BSA | 3.2 | 5.08 |
| Ovalbumin | 6.9 | 5.52 |

### Beispiel C7: Trennung von isomeren Nitroacetaniliden

Auf die Trennsäule aus Beispiel B4 werden 5 µl einer Mischung aus 2-Nitroacetanilid (88 µg/ ml) und 3-Nitroacetanilid (545 µg/ ml) in dem Elutionsmittel n-Heptan/Dioxan (99:1; V:V) aufgetragen. Es wird mit 0,2 ml/min eluiert und durch Messung der UV- Absorption bei 254 nm detektiert. Beide Substanzen werden getrennt nach 4,4 Minuten (2-Nitroacetanilid) und nach 9,7 Minuten (3-Nitroacetanilid) eluiert.

Bei der erfindungsgemäßen Verwendung der porösen keramischen Formkörper in Kartuschensystemen sind keine zusätzlichen Säulenrohre aus Glas oder Edelstahl notwendig, sondern lediglich die Verwendung von wiederverwendbaren Halterungen. Da die Formkörper aus einem einheitlichen Material bestehen, ist die Entsorgung verbrauchter Kartuschen erheblich vereinfacht. Die feste unveränderliche Packung des Sorbens gewährleistet eine gute Reproduzierbarkeit zwischen verschiedenen Chromatographieläufen.

Auch ohne weitere Ausführungen wird davon ausgegangen, daß ein Fachmann die obige Beschreibung im weitesten Umfang nutzen kann. Die bevorzugten Ausführungsformen sind deswegen lediglich als beschreibende, keineswegs in irgendeiner Weise begrenzende Offenbarung aufzufassen.

## Patentansprüche

1. Poröser keramischer Formkörper, im wesentlichen bestehend aus calciumphosphathaltige Verbindungen wie Hydroxylapatit, SiO₂, Al₂O₃, SiC, SiOC, ZrO₂, TiO₂ oder BN, dadurch gekennzeichnet, daß die Porenflächen mit einem Silanderivat der Formel I oder einem Siloxan modifiziert sind,
SiXₙR¹₍₃₋ₙ₎R² I
worin
X Methoxy, Ethoxy oder Halogen,
R¹ C₁ - C₅ -Alkyl,
n 1, 2 oder 3
bedeuten und
R² eine der im folgenden angegebene Bedeutungen besitzt:
a) unsubstituiertes oder substituiertes Alkyl oder Aryl, wie z.B. n-Octadecyl, n-Octyl, Benzyl- oder Cyanopropyl;
b) anionische oder saure Reste, wie z.B. Carboxypropyl;
c) kationische oder basische Reste, wie z.B. Aminopropyl, Diethylaminopropyl oder Triethylammoniumpropyl;
d) hydrophile Reste, wie z.B. (2,3-Dihydroxypropyl)-oxypropyl;
e) bindungsfähige aktivierte Reste, wie z.B. (2,3-Epoxypropyl)-oxypropyl.

2. Formkörper nach Anspruch 1, dadurch gekennzeichnet, daß er die Form eines Zylinders mit kreisförmigen oder elliptischen Querschnitt oder einer prismatischen Säule besitzt.

3. Formkörper nach Anspruch 2, dadurch gekennzeichet, daß die Mantelfläche(n) unporös sind.

4. Formkörper nach Anspruch 1, dadurch gekennzeichnet, daß er die Form einer flachen Scheibe oder Platte besitzt.

5. Verwendung von porösen keramischen Formkörpern mit den Merkmalen eines der Ansprüche 1 - 4 für die Flüssigkeitschromatographie.

6. Chromatographiesäule ausgerüstet mit Anschlußstücken für Zu- und Ableitung für Elutionsmittel, dadurch gekennzeichnet, daß als stationäre Phase ein poröser keramischer Formkörper mit den Merkmalen eines der Ansprüche 1 oder 2 enthalten ist.

7. Kartusche für die Flüssigkeitschromatographie, dadurch gekennzeichnet, daß als stationäre Phase ein poröser keramischer Formkörper mit den Merkmalen eines der Ansprüche 1 oder 2 enthalten ist.

8. Verfahren zur säulenchromatographischen Auftrennung eines Gemisches, wobei eine Mischung in einem Elutionsmittel gelöst wird, auf eine Trennsäule aufgetragen wird und mit einem Elutionsmittel eluiert wird, dadurch gekennzeichnet, daß als Trennsäule eine Chromatographiesäule nach Anspruch 6 verwendet wird.

## Claims

1. Porous ceramic shaped body, essentially consisting of calcium phosphate-containing compounds such as hydroxyapatite, SiO₂, Al₂O₃, SiC, SiOC, ZrO₂, TiO₂ and BN, characterized in that the pore surfaces are modified with a silane derivative of the formula I or a siloxane,
SiXₙR¹₍₃₋ₙ₎R²
where
X is methoxy, ethoxy or halogen,
R¹ is C₁-C₅-alkyl,
n is 1, 2 or 3
and
R² has one of the meanings given below:
a) unsubstituted or substituted alkyl or aryl such as, for example, n-octadecyl, n-octyl, benzyl or cyanopropyl;
b) anionic or acid radicals such as, for example, carboxypropyl;
c) cationic or basic radicals such as, for example, aminopropyl, diethylaminopropyl or triethylammoniumpropyl;
d) hydrophilic radicals such as, for example, (2,3-dihydroxypropyl)oxypropyl;
e) activated radicals capable of bonding, such as, for example (2,3-epoxypropyl)oxypropyl.

2. Shaped body according to Claim 1, characterized in that it has the shape of a cylinder having a circular or elliptical cross-section or of a prismatic column.

3. Shaped body according to Claim 2, characterized in that the outer surface(s) is/are nonporous.

4. Shaped body according to Claim 1, characterized in that it has the shape of a flat disc or plate.

5. Use of porous ceramic shaped bodies having the features of one of Claims 1-4 for liquid chromatography.

6. Chromatography column equipped with connection pieces for feed and outlet lines for eluant, characterized in that a porous ceramic shaped body having the features of one of Claims 1 or 2 is present as stationary phase.

7. Cartridge for liquid chromatography, characterized in that a porous ceramic shaped body having the features of one of Claims 1 or 2 is present as stationary phase.

8. Process for column-chromatographic separation of a mixture, a mixture being dissolved in an eluant, applied to a separation column and eluted with an eluant, characterized in that a chromatography column according to Claim 6 is used as separation column.

## Revendications

1. Pièce moulée en céramique poreuse, constituée essentiellement par des composés contenant du phosphate de calcium tels que hydroxyapatite, SiO₂, Al₂O₃, SiC, SiOC, ZrO₂, TiO₂ ou BN, caractérisé en ce que les surfaces des pores sont modifiées par un dérivé de silane de la formule I ou par un siloxane,
SiXₙR¹₍₃₋ₙ₎R² I
dans laquelle
X est méthoxy, éthoxy ou halogène,
R¹ est alkyle en C₁ à C₅,
n vaut 1, 2 ou 3, et
R² a l'une des significations suivantes :
a) alkyle ou aryle non substitué ou substitué tel que, par exemple, le n-octadécyle, le n-octyle, le benzyle ou le cyanopropyle ;
b) des résidus anioniques ou acides tels que, par exemple, le carboxypropyle ;
c) des résidus cationiques ou basiques tels que, par exemple, l'aminopropyle, le diéthylaminopropyle ou le triéthylammoniumpropyle ;
d) des résidus hydrophiles tels que, par exemple, le (2,3-dihydroxypropyl)-oxypropyle ;
e) des résidus activés aptes à la liaison tels que, par exemple, le (2,3-époxypropyl)-oxypropyle.

2. Pièce moulée selon la revendication 1, caractérisée en ce qu'elle possède la forme d'un cylindre avec une section circulaire ou elliptique ou la forme d'une colonne prismatique.

3. Pièce moulée selon la revendication 2, caractérisée en ce que la ou les surfaces latérales sont non poreuses.

4. Pièce moulée selon la revendication 1, caractérisée en ce qu'elle possède la forme d'un disque plat ou d'un plateau.

5. Utilisation de pièces moulées en céramique poreuse ayant les caractéristiques de l'une des revendications 1 à 4 pour la chromatographie en phase liquide.

6. Colonne de chromatographie équipée de raccords pour l'arrivée et l'évacuation de l'agent d'élution, caractérisée en ce qu'elle contient comme phase stationnaire une pièce moulée en céramique poreuse ayant les caractéristiques de la revendication 1 ou de la revendication 2.

7. Cartouche pour la chromatographie en phase liquide, caractérisée en ce qu'elle contient comme phase stationnaire une pièce moulée en céramique poreuse ayant les caractéristiques de la revendication 1 ou de la revendication 2.

8. Procédé de séparation d'un mélange par chromatographie sur colonne, dans lequel un mélange est dissous dans un agent d'élution, déposé sur une colonne de séparation et élué au moyen d'un agent d'élution, caractérisé en ce qu'une colonne de chromatographie selon la revendication 6 est utilisée comme colonne de séparation.
